# EUROPÄISCHE PATENTSCHRIFT

(11) **EP 3 861 237 B1**
(45) Veröffentlichungstag und Bekanntmachung des Hinweises auf die Patenterteilung: **01.01.2025**
(21) Anmeldenummer: 19769468.0
(22) Anmeldetag: 16.09.2019
(51) Int. Cl.: F16J 15/38, F16J 15/34, F16L 27/08

(54) **GLEITRINGDICHTUNGSANORDNUNG FÜR EINE DREHDURCHFÜHRUNG**
MECHANICAL FACE SEAL ASSEMBLY FOR A ROTARY BUSHING
ENSEMBLE JOINT D'ÉTANCHÉITÉ À BAGUES DE GLISSEMENT POUR UN PASSAGE TOURNANT

(30) Priorität: 02.10.2018 DE 102018216921
(43) Veröffentlichungstag der Anmeldung: 11.08.2021
(73) Patentinhaber: EagleBurgmann Germany GmbH & Co. KG, 82515 Wolfratshausen (DE)
(72) Erfinder: RANKL, Stephan, 82205 Gilching (DE); GRÖLL, Andreas, 82335 Berg (DE); EISFELD, Christian, 82515 Wolfratshausen (DE)
(74) Vertreter: Hoefer & Partner Patentanwälte mbB
(86) Internationale Anmeldenummer: PCT/EP2019/074675
(87) Internationale Veröffentlichungsnummer: WO 2020/069842

(56) Entgegenhaltungen:
- EP-A2- 0 392 838
- WO-A1-2004/051130
- DE-A1- 3 810 060
- DE-B3- 102014 221 000
- DE-U1- 8 330 159
- US-A- 5 062 777

## Beschreibung

Die vorliegende Erfindung betrifft eine innendruckbeaufschlagte Gleitringdichtungsanordnung für eine Drehdurchführung, bei der ein abzudichtendes Medium durch das Innere der Gleitringdichtung hindurchgeführt wird. Ferner betrifft die vorliegende Erfindung eine Drehdurchführung mit einer erfindungsgemäßen Gleitringdichtungsanordnung.

Gleitringdichtungsanordnungen sind aus dem Stand der Technik in unterschiedlichen Ausgestaltungen bekannt. Üblicherweise werden Gleitringdichtungen dabei zur Abdichtung an Wellen oder anderen rotierbaren Bauteilen verwendet, wobei eine Außendruckbeaufschlagung der Gleitringdichtung, bei der das abzudichtende Medium radial außerhalb des Dichtspalts der Gleitringdichtung angeordnet ist, vorgesehen ist. Bei verschiedensten Industrieanwendungen müssen jedoch Verbindungen zwischen stationären Bauteilen und rotierenden Bauteilen mittels Drehdurchführungen überbrückt werden, welche entsprechen abgedichtet werden müssen. Insbesondere in der Lebensmittelindustrie bei der Abfüllung beispielsweise von Flüssigkeiten dürfen durch die Abdichtungen an der Drehdurchführung keinerlei Verunreinigungen des abzufüllenden Mediums auftreten. Weiterhin müssen auch entsprechende Reinigungsvorgänge und Sterilisationsvorgänge möglich sein, ohne dass eine Demontage der Drehdurchführung bzw. der Dichtungsbauteile notwendig ist.

Weiterhin zeigt die DE 10 2014 221000 B3 eine Gleitringdichtungsanordnung gemäß dem Oberbegriff des Anspruchs 1.

Die WO 2004/051130 A1 und die EP 0 392 838 A2 zeigen eine Gleitringdichtungsanordnung mit einer im Fluidkanal angeordneten Vorspanneinrichtung.

Weitere Gleitringdichtungsanordnungen sind aus der DE 38 10 060 A1 und der DE 83 30 159 U1 bekannt.

Es ist daher Aufgabe der vorliegenden Erfindung, eine innendruckbeaufschlagte Gleitringdichtungsanordnung bereitzustellen, welche insbesondere bei Drehdurchführungen verwendet werden kann und neben einfachem Aufbau und einfacher, kostengünstiger Herstellbarkeit auch auf einfache und sichere Weise ohne Demontage gereinigt werden kann und ggf. auch sterilisiert werden kann. Ferner ist es Aufgabe der vorliegenden Erfindung eine Drehdurchführung mit einer Gleitringdichtungsanordnung, insbesondere zum Durchführen von flüssigen Lebensmitteln, bereitzustellen.

Diese Aufgabe wird durch eine Gleitringdichtungsanordnung mit den Merkmalen des Anspruchs 1 bzw. eine Drehdurchführung mit den Merkmalen des Anspruchs 11 gelöst. Die Unteransprüche zeigen bevorzugte Weiterbildungen der Erfindung.

Die erfindungsgemäße Gleitringdichtungsanordnung mit den Merkmalen des Anspruchs 1 weist den Vorteil auf, dass die Gleitringdichtungsanordnung innendruckbeaufschlagt ist und somit das Medium im Inneren der Gleitringdichtungsanordnung hindurchgeführt werden kann. Dabei ist eine sichere Abdichtung des Innen hindurchgeführten Mediums möglich und ferner eine einfache und schnelle Reinigung ohne Demontage möglich. Weiterhin kann die Gleitringdichtungsanordnung auch sterilisiert werden, ohne dass hierbei eine Demontage der Gleitringdichtungsanordnung notwendig ist. Dies wird erfindungsgemäß dadurch erreicht, dass die Gleitringdichtungsanordnung eine innendruckbeaufschlagte Gleitringdichtung mit einem rotierenden Gleitring und einem stationären Gleitring aufweist, welche zwischen sich einen Dichtspalt definieren. Am Dichtspalt ist dabei ein Innendurchmesser des rotierenden Gleitrings gleich einem Innendurchmesser des stationären Gleitrings. Dadurch werden Absätze oder dergleichen direkt am Dichtspalt vermieden, sodass während der Nutzung der Gleitringdichtungsanordnung ein Festsetzen von Partikeln oder dergleichen in der Nähe des Dichtspalts minimiert ist. Ferner kann hierdurch auch die Gleitringdichtung am Dichtspalt sehr gut gereinigt werden. Weiterhin umfasst die Gleitringdichtungsanordnung eine Vorspanneinrichtung, welche einen der Gleitringe in Axialrichtung gegen den anderen Gleitring vorspannt. Vorzugsweise ist die Vorspanneinrichtung am stationären Gleitring angeordnet. Die Gleitringdichtungsanordnung umfasst eine Nebendichtung, welche am axial vorgespannten Gleitring derart angeordnet ist, dass die Nebendichtung sich gemeinsam mit dem vorgespannten Gleitring in Axialrichtung, d. h. in Durchströmungsrichtung durch die Gleitringdichtung, bewegt. Somit ist erfindungsgemäß sichergestellt, dass die Nebendichtung immer relativ an der gleichen Position zum axial vorgespannten Gleitring verbleibt, im Vergleich, wenn die Nebendichtung am abzudichtenden Bauteil angeordnet wäre und sich nicht gemeinsam mit dem axial vorgespannten Gleitring in Axialrichtung bewegen würde. Somit kann die Nebendichtung immer an der optimalen Dichtungsposition am axial vorgespannten Gleitring verbleiben.

Des Weiteren ist die Vorspanneinrichtung derart an der Gleitringdichtung angeordnet, dass kein Kontakt mit dem abzudichtenden Medium besteht. Dies hat den Vorteil, dass sich in der Vorspanneinrichtung, welche beispielsweise Schraubenfedern oder Wellfedern oder dergleichen sein können, keine schwer zu reinigenden Räume oder Hinterschneidungen oder dergleichen vorhanden sind. Hierdurch wird eine Reinigung und Sterilisation deutlich vereinfacht.

Weiter weist der axial vorgespannte Gleitring einen Hauptbereich und einen Nebenbereich auf, wobei am Hauptbereich eine Gleitfläche des Gleitrings angeordnet ist und der Nebenbereich einen kleineren Außendurchmesser als ein Außendurchmesser des Hauptbereichs aufweist. Die Nebendichtung ist dabei am Nebenbereich des axial vorgespannten Gleitrings angeordnet. Diese Ausgestaltung hat ferner der Vorteil, dass durch den Nebenbereich eine gewisse Führung für das innen durchströmende Medium bei der Gleitringdichtungsanordnung vorhanden ist.

Ferner weist der rotierende Gleitring und der stationäre Gleitring jeweils eine Bandage auf. Die Bandagen sind vorzugsweise gleich ausgebildet. Weiter bevorzugt sind die Bandagen derart vorgesehen, dass eine radiale Höhe der Bandagen größer ist als eine maximale radiale Höhe des rotierenden und stationären Gleitrings.

Vorzugsweise ist die Nebendichtung an einer radial nach außen gerichteten Seite des axial vorgespannten Gleitrings angeordnet. Die Position der Nebendichtung am axial vorgespannten Gleitring ist dabei bevorzugt an einer von einer Gleitfläche des axial vorgespannten Gleitrings abgewandten Endseite. Diese Anordnung der Nebendichtung am axial bewegbaren Gleitring hat insbesondere Vorteile bei der Reinigung, da dadurch der Abdichtungspunkt zwischen dem Gleitring und einem äußeren Bauteil möglichst nah an dem dem Dichtspalt entgegengesetzten Ende des Gleitrings liegt, sodass über die Nebendichtung keine unerwünschten Kräfte auf den Gleitring in der Nähe des Dichtspalts eingebracht werden.

Die Bandagen sind weiterhin bevorzugt derart am Gleitring angeordnet, dass ein Schwerpunkt der Bandage und ein Schwerpunkt des Gleitrings in einer gemeinsamen Ebene, die senkrecht zu einer Mittelachse der Gleitringdichtungsanordnung ist, liegen. Somit liegen in Radialrichtung die Schwerpunkte von Gleitring und Bandage übereinander. Hierdurch wird sichergestellt, dass die Gleitringdichtung insbesondere für hohe Drücke ausgelegt werden kann, ohne dass dabei Beschädigungen an den Gleitringen auftreten.

Gemäß einer weiteren bevorzugten Ausgestaltung der vorliegenden Erfindung ist die Vorspanneinrichtung derart angeordnet, dass die Vorspanneinrichtung ausschließlich an der Bandage angreift. Dies hat den Vorteil, dass im Betrieb keine zusätzlichen Kräfte von der Vorspanneinrichtung direkt auf den Gleitring ausgeübt werden. Vorzugsweise greift die Vorspanneinrichtung dabei an einem radial innersten Bereich der Bandage an.

Besonders bevorzugt ist die Nebendichtung dabei in einer Umfangsnut am Nebenbereich des axial vorgespannten Gleitrings angeordnet. Hierbei bildet ein Flansch einen Endbereich des axial vorgespannten Gleitrings. Eine erste Breite des Flansches ist dabei kleiner als eine zweite

Breite der Umfangsnut. Weiter bevorzugt ist ein Außendurchmesser des Flansches kleiner als ein Außendurchmesser des Nebenbereichs. Dadurch ist es im montierten Zustand möglich, dass die Nebendichtung etwas gequetscht wird und eine radiale Außenseite des Flansches überdeckt. Hierdurch kann eine besonders sichere und sterile Reinigung in diesem Bereich der Gleitringdichtungsanordnung ermöglicht werden.

Gemäß einer weiteren bevorzugten Ausgestaltung der Erfindung umfasst die Gleitringdichtungsanordnung ferner Fixierelemente, wobei die Fixierelemente zur Fixierung der Gleitringe vorgesehen sind. Die Fixierelemente sind dabei an der Bandage angeordnet. Dadurch müssen für die Fixierelemente keine Ausnehmungen oder dergleichen an den Gleitringen vorgesehen werden, und die Fixierung der Gleitringe erfolgt über die Bandagen. Hierdurch ist die Herstellung der Gleitringe deutlich vereinfacht.

Weiter bevorzugt umfasst die Gleitringdichtungsanordnung ferner ein stationäres Bauteil, an welchem sich die Vorspanneinrichtung abstützt, wobei bevorzugt ein Innendurchmesser des Abstützbauteils größer ist als ein Innendurchmesser des axial vorgespannten Gleitrings. Hierdurch kann sichergestellt werden, dass sich eine Durchströmungsgeschwindigkeit durch die Gleitringdichtungsanordnung im Bereich der Gleitringdichtung erhöht, da ein Strömungsquerschnitt an der Gleitringdichtungsanordnung reduziert wird.

Vorzugsweise sind ein Innendurchmesser des rotierenden Gleitrings und ein Innendurchmesser des stationären Gleitrings über die gesamte Axiallänge der Gleitringe konstant. Hierdurch ergeben sich an den Innenseiten der Gleitringe keine Bereiche und Vertiefungen, an welchen Verschmutzungen oder dergleichen im Bereich der Gleitringdichtungsanordnung auftreten können.

Weiterhin betrifft die vorliegende Erfindung eine Drehdurchführung mit einer erfindungsgemäßen Gleitringdichtungsanordnung. Die Drehdurchführung wird vorzugsweise im Bereich der Lebensmittelindustrie, insbesondere bei Anlagen zur Handhabung von Getränken oder Wasser, beispielsweise Abfüllanlagen, verwendet.

Nachfolgend werden bevorzugte Ausführungsbeispiele der Erfindung unter Bezugnahme auf die begleitende Zeichnung im Detail beschrieben. In der Zeichnung sind gleiche bzw. funktional gleiche Teile jeweils mit den gleichen Bezugszeichen bezeichnet. In der Zeichnung ist:
- Fig. 1: eine schematische Schnittansicht einer Drehdurchführung mit einer Gleitringdichtungsanordnung gemäß einem ersten Ausführungsbeispiel der Erfindung,
- Fig. 2: eine vergrößerte, schematische Schnittansicht einer Nebendichtung von Fig. 1,
- Fig. 3: eine schematische Schnittansicht einer Drehdurchführung mit einer Gleitringdichtungsanordnung gemäß einem zweiten Ausführungsbeispiel der Erfindung, und
- Fig. 4: eine schematische Schnittansicht einer Drehdurchführung mit einer Gleitringdichtungsanordnung gemäß einem dritten Ausführungsbeispiel der Erfindung.

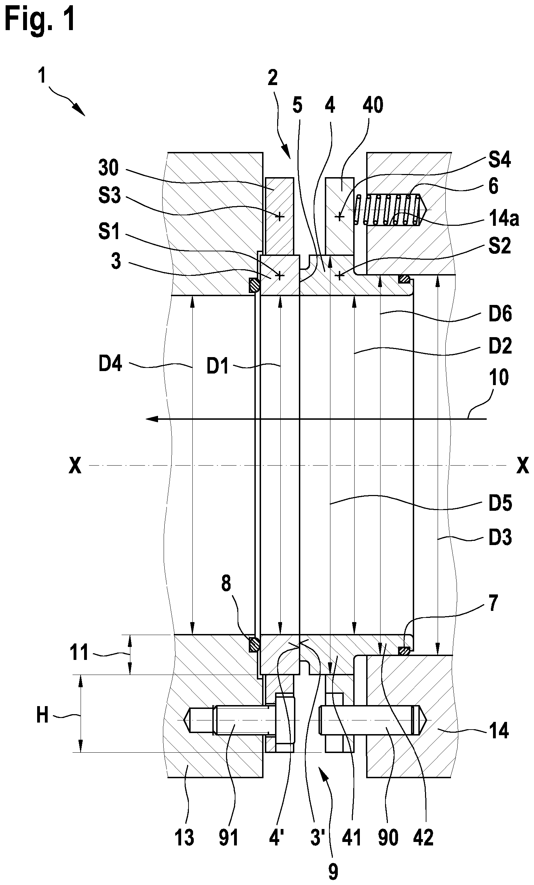

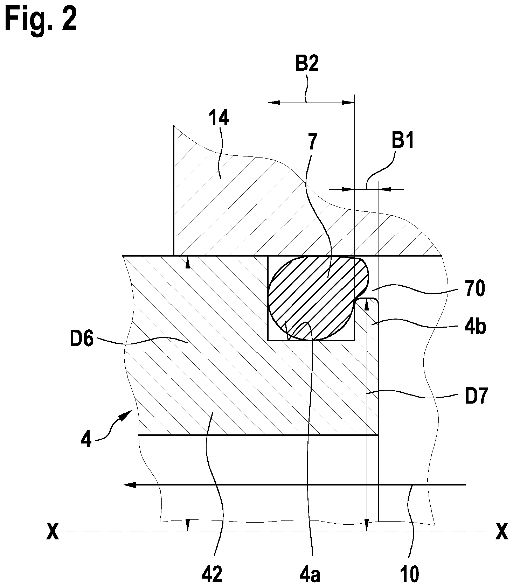

Nachfolgend wird unter Bezugnahme auf die Fig. 1 und 2 eine Gleitringdichtungsanordnung 1 einer Drehdurchführung im Detail beschrieben.

Die Drehdurchführung ist in einer lebensmittelverarbeitenden Maschine angeordnet und dient zur Verbindung eines Leitungsteils mit einer rotierenden, hohlen Welle. Die hohle Welle ist dabei ein rotierendes Bauteil 13 und das Leitungsbauteil ist ein stationäres Bauteil 14.

Wie aus Fig. 1 ersichtlich ist, umfasst die Gleitringdichtungsanordnung 1 eine Gleitringdichtung 2 mit einem rotierenden Gleitring 3 und einem stationären Gleitring 4. Der rotierende Gleitring 3 und der stationäre Gleitring 4 definieren zwischen ihren Dichtflächen 3', 4' einen Dichtspalt 5.

Die Gleitringdichtung 2 ist eine innendruckbeaufschlagte Gleitringdichtung, bei der das abzudichtende Medium im Inneren der Gleitringdichtung 2 strömt. Der Pfeil 10 in Fig. 1 zeigt die Durchströmungsrichtung durch die Gleitringdichtungsanordnung 1 an. In diesem Ausführungsbeispiel strömt das Medium von dem stationären Bauteil 14 in das rotierende Bauteil 13.

Die Gleitringdichtungsanordnung 1 umfasst ferner eine Vorspanneinrichtung 6. In diesem Ausführungsbeispiel spannt die Vorspanneinrichtung 6 den stationären Gleitring 4 gegen den rotierenden Gleitring 3 vor.

Die Vorspanneinrichtung 6 umfasst eine Vielzahl von zylindrischen Schraubenfedern, welche entlang des Umfangs in Ausnehmungen 14a des stationären Bauteils 14 angeordnet sind. Die Schraubenfedern sind in gleichen Abständen entlang des Umfangs angeordnet. Vorzugsweise sind 3 bis 9 Schraubenfedern vorgesehen.

Wie aus Fig. 1 ersichtlich ist, weist der rotierende Gleitring 3 eine erste Bandage 30 auf und der stationäre Gleitring 4 weist eine zweite Bandage 40 auf. Die beiden Bandagen 30, 40 sind identisch aufgebaut. Wie aus Fig. 1 ersichtlich ist, ist dabei eine radiale Höhe H der Bandagen 30, 40 jeweils größer als eine maximale radiale Dicke 11 des rotierenden Gleitrings 3 und des stationären Gleitrings 4. Die Gleitringe weisen dabei die gleiche radiale Dicke 11 auf.

Wie weiter aus Fig. 1 ersichtlich ist, ist die erste Bandage 30 am rotierenden Gleitring 3 derart angeordnet, dass ein Schwerpunkt S1 des rotierenden Gleitrings 3 und ein Schwerpunkt S3 der ersten Bandage 30 in einer gemeinsamen Ebene liegen, welche senkrecht zu einer Mittelachse X-X der Gleitringdichtungsanordnung 1 ist. Mit anderen Worten liegt der Schwerpunkt S1 und der Schwerpunkt S3 radial übereinander. Der stationäre Gleitring 4 und die zweite Bandage 40 weisen ebenfalls jeweils einen Schwerpunkt S2 und S4 auf, welche radial übereinander liegen, d.h. in einer gemeinsamen Ebene senkrecht zur Mittelachse X-X.

Die Bandagen 30, 40 umschließen jeweils den rotierenden und den stationären Gleitring, wobei zwischen den Gleitringen 3, 4 und den Bandagen 30, 40 jeweils eine kraftschlüssige Verbindung vorhanden ist. Wie weiter aus Fig. 1 ersichtlich ist, greift die Vorspanneinrichtung 6 an der zweiten Bandage 40 am stationären Gleitring 4 an, sodass der stationäre Gleitring 4 über die zweite Bandage 40 in Richtung zum rotierenden Gleitring 3 axial vorgespannt ist.

Wie weiter aus Fig. 1 ersichtlich ist, umfasst die Gleitringdichtungsanordnung 1 ferner eine Fixiereinrichtung 9. Die Fixiereinrichtung 9 fixiert einerseits den rotierenden Gleitring 3 am rotierenden Bauteil 13 und andererseits den stationären Gleitring 4 am stationären Bauteil 14. Hierbei umfasst die Fixiereinrichtung 9 mehrere Fixierstifte 90, welche in Durchgangsöffnungen in der zweiten Bandage 40 angeordnet sind und die Bandage 40 so am stationären Bauteil 14 fixieren. Hierbei sind mehrere Fixierstifte 90 in der Umfangsrichtung gleich verteilt an der zweiten Bandage 40 vorgesehen. Die erste Bandage 30 ist mittels Fixierschrauben 91 am rotierenden Bauteil 13 befestigt. Hierbei sind in gleicher Weise wie die Fixierstifte 90 die Fixierschrauben 91 entlang des Umfangs an der ersten Bandage 30 angeordnet und somit die erste Bandage 30 an das rotierende Bauteil 13 angeschraubt.

In Umfangsrichtung können hierbei am stationären Bauteil 14 abwechselnd Fixierstifte 90 der Fixiereinrichtung 9 und Schraubenfedern der Vorspanneinrichtung 6 angeordnet sein.

Die Gleitringdichtungsanordnung 1 umfasst weiterhin eine Nebendichtung 7, welche an dem axial vorgespannten stationären Gleitring 4 derart angeordnet ist, dass sich die Nebendichtung 7 gemeinsam mit dem axial vorgespannten Gleitring 4 in Axialrichtung (Richtung der Mittelachse X-X) bewegt.

Hierbei ist am stationären Gleitring 4 eine Umfangsnut 4a an einer radial nach außen gerichteten Seite des stationären Gleitrings 4 angeordnet. Wie aus Fig. 1 ersichtlich ist, ist die Umfangsnut 4a dabei an einer von einer Gleitfläche des stationären Gleitrings 4 abgewandten Endseite des stationären Gleitrings 4 vorgesehen. Um ein Herausfallen der Nebendichtung 7 zu vermeiden, ist hierbei ein umlaufender Flansch 4b vorgesehen. Der umlaufende Flansch 4b bildet auch den axialen Abschluss an der vom Dichtspalt abgewandten Endseite des stationären Gleitrings 4 (vgl. Fig. 2).

Hierbei ist eine erste Breite B1 des Flansches 4b kleiner als eine zweite Breite B2 der Umfangsnut 4a.

Die Nebendichtung 7 ist ein O-Ring, welcher einen viereckigen Querschnitt aufweist. Dadurch kann der O-Ring passgenau in die Umfangnut 4a angeordnet werden.

im Betrieb, wenn der stationäre Gleitring 4 Bewegungen in Axialrichtungen ausführt, wird die Nebendichtung 7 hierbei gemeinsam mit dem stationären Gleitring 4 in Axialrichtung bewegt.

Der stationäre Gleitring 4 weist, wie in Fig. 1 gezeigt, einen Hauptbereich 41 und einen Nebenbereich 42 auf. Am Hauptbereich 41 ist die Gleitfläche des stationären Gleitrings 4 vorgesehen. Am Hauptbereich 41 ist ferner auch die zweite Bandage 40 angeordnet. Am Nebenbereich, welcher eine geringere radiale Dicke als der Hauptbereich aufweist, ist die Nebendichtung 7 angeordnet.

Weiterhin weist der Hauptbereich 41 einen ersten Außendurchmesser D5 auf und der Nebenbereich 42 weist einen zweiten Außendurchmesser D6 auf. Hierbei ist der Außendurchmesser D6 des Nebenbereichs 42 kleiner als der erste Außendurchmesser D5 des Hauptbereichs.

Wie weiter aus Fig. 2 ersichtlich ist, weist der Flansch 4b einen dritten Außendurchmesser D7 auf, welcher kleiner ist als der zweite Außendurchmesser D6. Dadurch ergibt sich am Flansch 4b radial nach außen ein Zwischenraum 70. Somit strömt abzudichtendes Medium direkt auf die Nebendichtung 7, wodurch die Nebendichtung 7 im Betrieb mit Druck beaufschlagt ist und eine Verformung erfährt, so dass eine noch bessere Abdichtung im Bereich der Nebendichtung 7 zum stationären Bauteil 14 erhalten wird. Auch kann der O-Ring im montierten Zustand gequetscht werden und sich teilweise in dem Zwischenraum 70 verformen.

Weiterhin ist ein erster Innendurchmesser D1 des rotierenden Gleitrings 3 gleich einem zweiten Innendurchmesser D2 des stationären Gleitrings 4. Hierdurch wird vermieden, dass im Bereich der Gleitringdichtung 2 Vertiefungen oder Ausnehmungen oder dergleichen an der vom abzudichtenden Medium durchströmten Innenseite der Gleitringdichtungsanordnung 2 vorhanden sind, welche schwer zu reinigen sind bzw. welche schwer zu sterilisieren wären. Die Innendurchmesser D1 und D2 bleiben dabei in Axialrichtung über die gesamte Axiallänge des rotierenden und stationären Gleitrings 3, 4 konstant.

Ein dritter Innendurchmesser D3 des stationären Bauteils 14 ist etwas größer als die Innendurchmesser D1 und D2. Dadurch wird die axiale Beweglichkeit des stationären Gleitrings 4 sichergestellt. Ein vierter Innendurchmesser D4 des rotierenden Bauteils 13 ist wiederum gleich wie der erste und zweite Innendurchmesser D1, D2, sodass hier kein Strömungshindernis für das in das Durchströmungsrichtung 10 strömende Medium beim Ausströmen aus der Gleitringdichtungsanordnung vorhanden ist.

Wie weiter aus Fig. 1 ersichtlich ist, ist ein O-Ring 8 an einer zum rotierenden Gleitring 3 gerichteten Seite des rotierenden Bauteils 13 vorgesehen, welcher einen Spalt zwischen dem rotierenden Bauteil 13 und dem rotierenden Gleitring 3 in Radialrichtung abdichtet.

Somit kann die erfindungsgemäße Gleitringdichtungsanordnung 1 mit der innendruckbeaufschlagten Gleitringdichtung 2 einfach und gründlich gereinigt und sterilisiert werden. Auch der Übergang an den unterschiedlichen Innendurchmessern D2 und D3 kann einfach und sicher gereinigt werden, da der Nebenbereich 42 des stationären Gleitrings 4 eine relativ kleine radiale Dicke aufweist. Hierbei ist auch ein Absatz zwischen dem dritten Innendurchmesser D3 und dem zweiten Innendurchmesser D2 relativ klein.

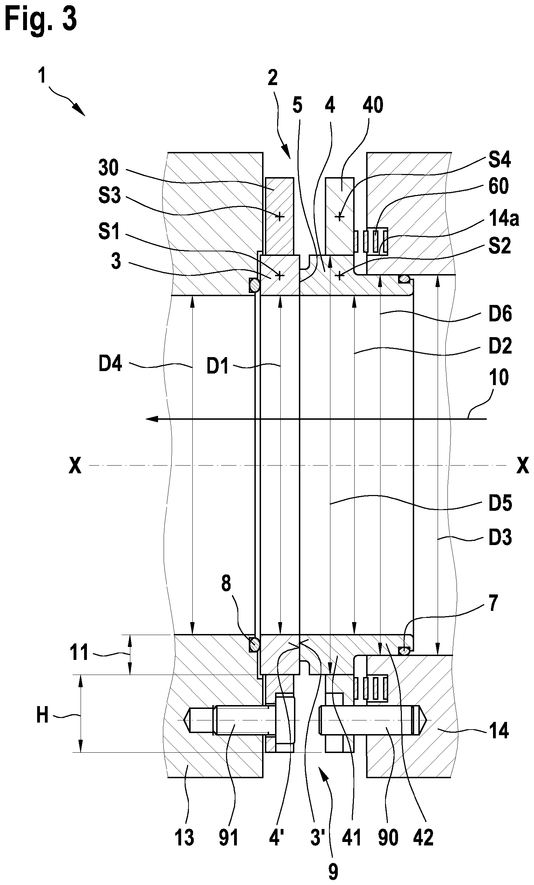

Fig. 3 zeigt eine Gleitringdichtungsanordnung mit einer innendruckbeaufschlagten Gleitringdichtung gemäß einem zweiten Ausführungsbeispiel der Erfindung. Das zweite Ausführungsbeispiel entspricht im Wesentlichen dem ersten Ausführungsbeispiel, wobei im Unterschied zum ersten Ausführungsbeispiel beim zweiten Ausführungsbeispiel die Vorspanneinrichtung eine umlaufende Wellfeder 60 umfasst. Die umlaufende Wellfeder 60 ist in einer umlaufenden Ausnehmung 14a im stationären Bauteil 14 angeordnet. Wie im ersten Ausführungsbeispiel übt die Wellfeder 60 als Vorspanneinrichtung dabei nur auf die zweite Bandage 40 eine direkte Vorspannkraft auf. Somit wird der stationäre Gleitring 4 über die kraftschlüssige Verbindung mit der zweiten Bandage 40 in Axialrichtung vorgespannt. Ansonsten entspricht dieses Ausführungsbeispiel dem ersten Ausführungsbeispiel, so dass auf die dort gegebene Beschreibung verwiesen werden kann.

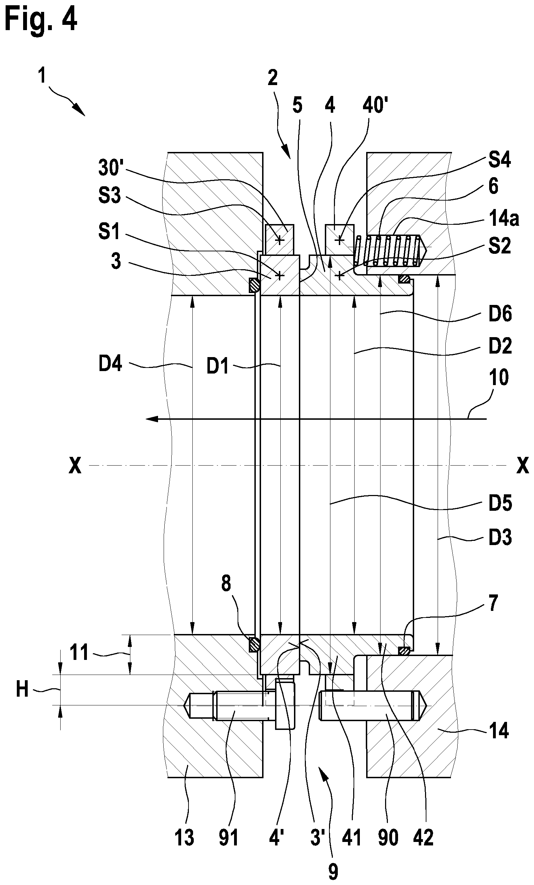

Fig. 4 zeigt eine Gleitringdichtungsanordnung einer innendruckbeaufschlagten Gleitringdichtung gemäß einem dritten Ausführungsbeispiel der Erfindung. Das dritte Ausführungsbeispiel entspricht im Wesentlichen dem ersten Ausführungsbeispiel und weist wie das erste Ausführungsbeispiel eine Vorspanneinrichtung 6, umfassend eine Vielzahl von zylindrischen Schraubenfedern auf, welche entlang des Umfangs in Ausnehmungen 14a des stationären Bauteils 14 angeordnet sind. Im Unterschied zum ersten Ausführungsbeispiel sind die Vielzahl von Schraubenfedern jedoch derart angeordnet, dass die Schraubenfedern eine Vorspannkraft in Axialrichtung gleichzeitig auf die Bandage 40' und den stationären Gleitring 4 ausüben (vgl. Fig. 4). Hierdurch wird eine besonders gleichmäßige Krafteinleitung sowohl in die Bandage 40' als auch den stationären Gleitring 4 erreicht. Wie weiter aus Fig. 4 ersichtlich ist, sind die Bandagen mit einem im Wesentlichen quadratischen Querschnitt vorgesehen. Dadurch liegen die Schwerpunkte S3 und S4 der Bandagen 30' und 40' näher an der Mittelachse X-X und somit auch näher an den Schwerpunkten S1 und S2 des stationären und rotierenden Gleitrings. Wie weiter aus Fig. 4 ersichtlich ist, ist durch die kurze radiale Bauhöhe der Bandagen 30' und 40' eine Fixierung mittels Fixierstiften 90 bzw. Fixierschrauben 91 derart gelöst, dass Bandagen 30', 30' halb offene Ausnehmungen, welche als Halbzylinder und/oder Halboval vorgesehen sein können, aufweisen. Ansonsten entspricht dieses Ausführungsbeispiel dem ersten Ausführungsbeispiel, so dass auf die dort gegebene Beschreibung verwiesen kann.

Wie in den Ausführungsbeispielen dargelegt, kann somit erfindungsgemäß eine einfach aufgebaute Gleitringdichtungsanordnung bereitgestellt werden, welche in einer Drehdurchführung eine Abdichtung, insbesondere von Lebensmitteln wie Wasser oder Getränken oder dergleichen ermöglicht. Auch kann eine Reinigung und Sterilisation der Gleitringdichtungsanordnung einfach durchgeführt werden.

### Bezugszeichenliste

- 1: Gleitringdichtungsanordnung
- 2: Gleitringdichtung
- 3: Rotierender Gleitring
- 3`: Dichtfläche des rotierenden Gleitrings
- 4: Stationärer Gleitring
- 4': Dichtfläche des stationären Gleitrings
- 4a: Umfangsnut
- 4b: Flansch
- 5: Dichtspalt
- 6: Vorspanneinrichtung
- 7: Nebendichtung
- 8: O-Ring
- 9: Fixiereinrichtung
- 10: Durchströmungsrichtung
- 11: maximale radiale Dicke der Gleitringe
- 13: Rotierendes Bauteil
- 14: Stationäres Bauteil
- 14a: Ausnehmung
- 30, 30': Erste Bandage
- 40, 40': Zweite Bandage
- 41: Hauptbereich des stationären Gleitrings
- 42: Nebenbereich des stationären Gleitrings
- 60: umlaufende Wellfeder
- 70: Zwischenraum
- 90: Fixierstift
- 91: Fixierschrauben
- B1: Breite des Flansches
- B2: Breite der Umfangsnut
- D1: Innendurchmesser des rotierenden Gleitrings
- D2: Innendurchmesser des stationären Gleitrings
- D3: Innendurchmesser des stationären Bauteils
- D4: Innendurchmesser des rotierenden Bauteils
- D5: Außendurchmesser des Hauptbereichs 41
- D6: Außendurchmesser des Nebenbereichs 42
- D7: Außendurchmesser am Flansch
- H: radiale Höhe der Bandage
- S1: Schwerpunkt des rotierenden Gleitrings
- S2: Schwerpunkt des stationären Gleitrings
- S3: Schwerpunkt der ersten Bandage
- S4: Schwerpunkt der zweiten Bandage
- X-X: Mittelachse

## Patentansprüche

1. Gleitringdichtungsanordnung umfassend
- eine innendruckbeaufschlagte Gleitringdichtung (2) mit einem rotierenden Gleitring (3) und einem stationären Gleitring (4), welche zwischen sich einen Dichtspalt (5) definieren,
- wobei am Dichtspalt ein erster Innendurchmesser (D1) des rotierenden Gleitrings (3) gleich einem zweiten Innendurchmesser (D2) des stationären Gleitrings (4) ist,
- eine Vorspanneinrichtung (6), welche einen der Gleitringe in Axialrichtung (X-X) gegen den anderen der Gleitringe vorspannt und
- eine Nebendichtung (7), welche sich gemeinsam mit dem axial vorgespannten Gleitring in Axialrichtung bewegt, wobei die Nebendichtung (7) am axial vorgespannten Gleitring angeordnet ist, wobei die Vorspanneinrichtung derart an der Gleitringdichtung (2) angeordnet ist, dass kein Kontakt mit dem abzudichtenden Medium besteht,
- die Gleitringdichtungsanordnung eine erste Bandage (30) am rotierenden Gleitring (3) und/oder eine zweite Bandage (40) am stationären Gleitring (4) umfasst,
- **dadurch gekennzeichnet, dass** der axial vorgespannte Gleitring einen Hauptbereich (41) und einen Nebenbereich (42) mit einem kleineren Außendurchmesser (D6) als der Außendurchmesser (D5) des Hauptbereichs aufweist und die Nebendichtung (7) am Nebenbereich (42) angeordnet ist.

2. Gleitringdichtungsanordnung nach Anspruch 1, wobei die Nebendichtung (7) an einer radial nach außen gerichteten Seite des axial vorgespannten Gleitrings angeordnet ist.

3. Gleitringdichtungsanordnung nach Anspruch 2, wobei die Nebendichtung (7) an einer der Gleitflächen des vorgespannten Gleitrings abgewandten Endseite des vorgespannten Gleitrings angeordnet ist.

4. Gleitringdichtungsanordnung nach einem der vorherigen Ansprüche, wobei die erste und/oder zweite Bandage (30, 40) derart am rotierenden und/oder stationären Gleitring (3, 4) angeordnet ist, dass ein Schwerpunkt (S3) der ersten Bandage (30) und ein Schwerpunkt (S1) des rotierenden Gleitrings (3) und/oder ein Schwerpunkt (S4) der zweiten Bandage (40) und ein Schwerpunkt (S2) stationären Gleitrings (4) jeweils in einer gemeinsamen Ebene senkrecht zu einer Mittelachse (X-X) der Gleitringdichtungsanordnung liegen.

5. Gleitringdichtungsanordnung nach Anspruch 3 oder 4, wobei die Vorspanneinrichtung ausschließlich an einer der Bandagen (30, 40) angeordnet ist.

6. Gleitringdichtungsanordnung nach Anspruch 5, wobei die Vorspanneinrichtung (6) an einem radial innersten Bereich der Bandage angreift.

7. Gleitringdichtungsanordnung nach Anspruch 1, wobei die Nebendichtung (7) in einer Umfangsnut (4a) am Nebenbereich (42) derart angeordnet ist, dass ein Flansch (4b) einen Endbereich des axial vorgespannten Gleitrings bildet, wobei eine erste Breite (B1) des Flansches (4b) kleiner ist als eine zweite Breite (B2) der Umfangsnut (4a).

8. Gleitringdichtungsanordnung nach Anspruch 7, wobei der Flansch (4b) einen dritten Durchmesser (D7) aufweist, welcher kleiner ist als der Außendurchmesser (D6) des Nebenbereichs (42), so dass sich am Flansch (4b) radial nach außen ein Zwischenraum (70) ergibt.

9. Gleitringdichtungsanordnung nach einem der Ansprüche 4 bis 7, ferner umfassend eine Fixiereinrichtung (9), welche an der ersten und/oder zweiten Bandage (30, 40) zur Fixierung der Bandage mittels Fixierelementen (90, 91) angeordnet ist.

10. Gleitringdichtungsanordnung nach einem der vorhergehenden Ansprüche, wobei ein erster Innendurchmesser (D1) des rotierenden Gleitrings (3) und ein zweiter Innendurchmesser (D2) des stationären Gleitrings (4) in Axialrichtung jeweils konstant sind.

11. Drehdurchführung einer lebensmittelverarbeitenden Vorrichtung umfassend eine Gleitringdichtungsanordnung (1) gemäß einem der vorhergehenden Ansprüche.

## Claims

1. A mechanical seal arrangement comprising
- a internally pressurised mechanical seal (2) having a rotating sliding ring (3) and a stationary sliding ring (4), which define a sealing gap (5) therebetween,
- wherein at the sealing gap a first inner diameter (D1) of the rotating sliding ring (3) is equal to a second inner diameter (D2) of the stationary sliding ring (4),
- a biasing device (6), which biases one of the sliding rings in axial direction (X-X) against the other of the sliding rings, and
- a secondary seal (7), which moves in axial direction together with the axially biased sliding ring,
wherein the secondary seal (7) is arranged at the axially biased sliding ring, wherein the biasing device is arranged at the mechanical seal (2), so that no contact with the medium to be sealed exists,
- the mechanical seal arrangement comprises a first bandage (30) at the rotating sliding ring (3) and/or a second bandage (40) at the stationary sliding ring (4),
**characterised in that** the axially biased sliding ring comprises a main portion (41) and a secondary portion (42) with a smaller outer diameter (D6) than the outer diameter (D5) of the main portion, and the secondary seal (7) is arranged at the secondary portion (42).

2. The mechanical seal arrangement according to claim 1, wherein the secondary seal (7) is arranged at a radially outwardly directed side of the axially biased sliding ring.

3. The mechanical seal arrangement according to claim 2, wherein the secondary seal (7) is arranged at an end side of the biased sliding ring facing away from the sliding surfaces of the biased sliding ring.

4. The mechanical seal arrangement according to one of the previous claims, wherein the first and/or second bandage (30, 40) is arranged at the rotating and/or stationary sliding ring (3, 4), so that a gravity centre (S3) of the first bandage (30) and a gravity centre (S1) of the rotating sliding ring (3) and/or a gravity centre (S4) of the second bandage (40) and a gravity centre (S2) of the stationary sliding ring (4) each lie in a common plane perpendicular to a central axis (X-X) of the mechanical seal arrangement.

5. The mechanical seal arrangement according to claim 3 or 4, wherein the biasing device is arranged exclusively at one of the bandages (30, 40).

6. The mechanical seal arrangement according to claim 5, wherein the biasing device (6) engages at a radially innermost portion of the bandage.

7. The mechanical seal arrangement according to claim 1, wherein the secondary seal (7) is arranged in a circumferential groove (4a) at the secondary portion (42) so that a flange (4b) forms an end portion of the axially biased sliding ring, wherein a first width (B1) of the flange (4b) is smaller than a second width (B2) of the circumferential groove (4a).

8. The mechanical seal arrangement according to claim 7, wherein the flange (4b) comprises a third diameter (D7), which is smaller than the outer diameter (D6) of the secondary portion (42), so that an intermediate space (70) is formed radially outwards on the flange (4b).

9. The mechanical seal arrangement according to one of claims 4 to 7, further comprising a fixing device (9), which is arranged at the first and/or second bandage (30, 40) to fix the bandage via fixing elements (90, 91).

10. The mechanical seal arrangement according to one of the preceding claims, wherein a first inner diameter (D1) of the rotating sliding ring (3) and a second inner diameter (D2) of the stationary sliding ring (4) are each constant in axial direction.

11. A rotary feedthrough of a food processing device comprising a mechanical seal arrangement (1) according to one of the preceding claims.

## Revendications

1. Ensemble joint d'étanchéité à bagues de glissement comprenant
- un joint d'étanchéité à bagues de glissement (2) sollicité par la pression interne avec une bague de glissement rotative (3) et une bague de glissement stationnaire (4) qui définissent une fente d'étanchéité (5) entre elles,
- dans lequel un premier diamètre interne (D1) de la bague de glissement rotative (3) est égal à un deuxième diamètre interne (D2) de la bague de glissement stationnaire (4) au niveau de la fente d'étanchéité,
- un dispositif de précontrainte (6) qui précontraint l'une des bagues de glissement dans le sens axial (X-X) contre l'autre des bagues de glissement et
- un joint d'étanchéité secondaire (7) qui se déplace dans le sens axial conjointement avec la bague de glissement précontrainte axialement,
dans lequel le joint d'étanchéité secondaire (7) est agencé au niveau de la bague de glissement précontrainte axialement, dans lequel le dispositif de précontrainte est agencé au niveau du joint d'étanchéité à bagues de glissement (2) de telle manière qu'aucun contact n'existe avec le milieu à rendre étanche,
- l'ensemble joint d'étanchéité à bagues de glissement comprend un premier bandage (30) au niveau de la bague de glissement rotative (3) et/ou un second bandage (40) au niveau de la bague de glissement stationnaire (4),
- **caractérisé en ce que**
la bague de glissement précontrainte axialement présente une zone principale (41) et une zone secondaire (42) avec un diamètre externe (D6) inférieur au diamètre externe (D5) de la zone principale et le joint d'étanchéité secondaire (7) est agencé au niveau de la zone secondaire (42).

2. Ensemble joint d'étanchéité à bagues de glissement selon la revendication 1, dans lequel le joint d'étanchéité secondaire (7) est agencé au niveau d'un côté dirigé radialement vers l'extérieur de la bague de glissement précontrainte axialement.

3. Ensemble joint d'étanchéité à bagues de glissement selon la revendication 2, dans lequel le joint d'étanchéité secondaire (7) est agencé au niveau d'un côté d'extrémité de la bague de glissement précontrainte éloigné des surfaces de glissement de la bague de glissement précontrainte.

4. Ensemble joint d'étanchéité à bagues de glissement selon l'une quelconque des revendications précédentes, dans lequel le premier et/ou second bandage (30, 40) est agencé au niveau de la bague de glissement (3, 4) rotative et/ou stationnaire de telle manière qu'un centre de gravité (S3) du premier bandage (30) et un centre de gravité (S1) de la bague de glissement rotative (3) et/ou un centre de gravité (S4) du second bandage (40) et un centre de gravité (S2) de la bague de glissement stationnaire (4) se trouvent respectivement dans un plan commun perpendiculaire à un axe médian (X-X) de l'ensemble joint d'étanchéité à bagues de glissement.

5. Ensemble joint d'étanchéité à bagues de glissement selon la revendication 3 ou 4, dans lequel le dispositif de précontrainte est agencé exclusivement au niveau de l'un des bandages (30, 40).

6. Ensemble joint d'étanchéité à bagues de glissement selon la revendication 5, dans lequel le dispositif de précontrainte (6) agit sur une zone radialement la plus intérieure du bandage.

7. Ensemble joint d'étanchéité à bagues de glissement selon la revendication 1, dans lequel le joint d'étanchéité secondaire (7) est agencé dans une rainure périphérique (4a) au niveau de la zone secondaire (42) de telle manière qu'une bride (4b) forme une zone d'extrémité de la bague de glissement précontrainte axialement, dans lequel une première largeur (B1) de la bride (4b) est inférieure à une seconde largeur (B2) de la rainure périphérique (4a).

8. Ensemble joint d'étanchéité à bagues de glissement selon la revendication 7, dans lequel la bride (4b) présente un troisième diamètre (D7) qui est inférieur au diamètre externe (D6) de la zone secondaire (42) de sorte qu'il résulte un espace intermédiaire (70) radialement vers l'extérieur au niveau de la bride (4b).

9. Ensemble joint d'étanchéité à bagues de glissement selon l'une quelconque des revendications 4 à 7, comprenant de plus
un dispositif de fixation (9) qui est agencé au niveau du premier et/ou second bandage (30, 40) pour la fixation du bandage au moyen d'éléments de fixation (90, 91).

10. Ensemble joint d'étanchéité à bagues de glissement selon l'une quelconque des revendications précédentes, dans lequel un premier diamètre interne (D1) de la bague de glissement rotative (3) et un deuxième diamètre interne (D2) de la bague de glissement stationnaire (4) sont constants respectivement dans le sens axial.

11. Passage rotatif d'un dispositif de transformation des aliments comprenant un ensemble joint d'étanchéité à bagues de glissement (1) selon l'une quelconque des revendications précédentes.
